# EUROPEAN PATENT APPLICATION

(11) **EP 4 635 592 A1**
(43) Date of publication of application: **22.10.2025**
(21) Application number: 24382420.8
(22) Date of filing: 19.04.2024
(51) Int. Cl.: B01D 15/08, C02F 1/28, B01J 20/22

(54) **COLLOIDAL FLOATING MEMBRANE AND PREPARATION METHOD THEREOF**

(71) Applicant: Consejo Superior De Investigaciones Científicas - CSIC, 28006 Madrid (ES)
(72) Inventor: ARANDA GALLEGO, Maria Pilar, Madrid (ES); PÉREZ CARVAJAL, Javier, Madrid (ES); GONZÁLEZ, Jaime, Madrid (ES)
(74) Representative: Pons IP

(57) **Abstract**

The present invention relates to the field of water decontamination, and more precisely refers to a colloidal floating membrane useful in the decontamination of an aqueous medium and to the procedure for obtaining it. Said membrane comprises nanoparticles formed by self-aggregates of a zeolitic imidazolate framework (ZIF) in the presence of acetate species on the surface of the nanoparticle.

## Description

The present invention relates to the field of water decontamination, and more precisely refers to a colloidal floating membrane useful in the decontamination of an aqueous medium and to the procedure for obtaining it. Said membrane comprises nanoparticles formed by self-aggregates of a zeolitic imidazolate framework (ZIF) in the presence of acetate species on the surface of the nanoparticle.

### STATE OF THE ART

Water bodies may contain a large number of contaminants which impede its use for several applications such as industrial purposes, irrigation, or water drinking. Such contaminants are wide in range, including for example dissolved gases or salts, dyes, colorants, and all kinds of organic molecules dissolved or dispersed in the water.

One solution in order to remove such contaminants from the water is the use of porous materials or molecular sieves; made of clays, active carbon, or zeolites. However, the use of such porous materials presents several disadvantages such as high costs and times, among other reasons because once the contaminants (such as organic molecules) are adsorbed by the porous materials, such contaminants in addition to the porous media need to be separated from solution by cost and time consuming processes such as decantation and centrifugation, and by the application of high external pressures in order to desaturate the porous materials from such absorbed contaminants.

On the other hand, one kind of porous materials are those known as Metal-Organic Frameworks (MOF), which are a class of porous materials built up from metal nodes coordinated to organic molecules to assemble onto crystalline structures. This kind of materials can be designed to form different topologies, crystal morphologies and compositions by varying their chemical constitutional building units. MOFs can also be tailored by selecting their synthetic conditions in terms of temperature, time of reaction, solvent media or counterions, opening specific uses in countless applications including the surface related applications, like gas storage and separation, catalysis, drug delivery but also less trivial ones such as photonics. Colloidal MOFs are in special interest and have been a target during the last decade as their small size allows a wider range of applications than their parent microcrystals, allowing their use as intravenous drug delivery systems, bioimaging, as nanomotors or in further processing of monoliths presenting enhanced adsorption properties. These small particles in size, such as "NanoMOF", also allow the formation of heterostructures, like MOF/graphene based nanomaterials.

Zeolitic Imidazol Frameworks (ZIFs) are a classic subfamily of MOFs that present the crystalline topology of zeolites, characterized by large cages and small apertures with the chemical composition of MOF that implies a metal node and organic molecules as linkers. ZIF materials raise up in popularity in the early 2000s, and currently there are over 150 reported structures that include Zn atoms, Co atoms, and a large variety of imidazole-based molecules. ZIFs also find a wide range of applications; for example, one type of ZIF (ZIF-8) is suitable for being used in CO₂ sensing under humid conditions (Blanca Chocarro-Ruiz et al.; A CO2 optical sensor based on self-assembled metal-organic framework nanoparticles, Journal of Materials Chemistry A, 2018, 6, 13171-13177) among other applications such as gas separation, and photocatalisys, typically under UV light irradiation.

All in all, there is a need for an alternative material which can decontaminate water, which does not present the disadvantages inherent to conventional porous materials, while at the same time providing additional advantages such as floatability in water and easy removal from the water, among other advantages that will be made apparent throughout the description of the invention.

### DESCRIPTION OF THE INVENTION

The invention refers to a colloidal floating membrane comprising nanoparticles formed by self-aggregates of a zeolitic imidazolate framework (ZIF) in the presence of acetate species on the surface of the nanoparticle; to the method of preparation of such colloidal floating membrane; and to the use of such floating membrane for decontaminating a contaminated aqueous medium.

It was surprisingly found that adding at least one acetate species on the surface of the ZIF nanoparticles provided several technical effects, such as promoting floatability of the nanoparticles in water, improving their hydrophobicity and their lower water uptake, promoting the attraction and cohesion between nanoparticles, and stabilizing the interactions between nanoparticles.

In contrast, when nanoparticles are produced comprising ZIFs without acetate species attached to their surface (in other words, without acetates forming part of the nanoparticles themselves), and then dispersed or mixed in water, no floating membrane is formed at all, because these nanoparticles without acetate species do not show any floatability. In fact, it was experimentally confirmed that ZIF-8 nanoparticles synthesized with the precursors Zn(NO3)₂ or ZnCl₂ (instead of zinc acetate) did not show floatability. Hence, such nanoparticles without acetates species on their surface cannot be used for the aforementioned applications; at least not with the advantages of the first aspect of the invention. Non-limiting examples of ZIF nanoparticles without acetate species are ZIF-8 or ZIF-67 nanoparticles produced by using 2-methyl-imidazol and ZnCl₂, Zn(NO3)₂ , CoCl2 or Co(NO3)₂ as transition metal-organic precursors in their synthesis.

In a first aspect, the present invention relates to a colloidal floating membrane comprising nanoparticles dispersed in an aqueous medium, preferably water,
and a zeolitic imidazolate framework (ZIF); and
said nanoparticles comprising at least one acetate species on its surface,
   - wherein the acetate species interact chemically with the surface of the ZIF;
   - wherein the nanoparticles have a diameter ranging from 500 nm to 2000 nm measured by FE-SEM, preferably the nanoparticles have a diameter ranging from 500 nm to 1300 nm; and
   - wherein the floating membrane has an upper interphase with air and a lower interphase with the aqueous medium, preferably water.

The term, "colloidal floating membrane" or "colloidal floating film" or "membrane of the present invention" refers to a unique configuration wherein particles behave as a fluid surface instead of a rigid one. This particular configuration can be modeled as a colloidal suspension of particles trapped in a confinement region presenting a contact interface between the air and the aqueous medium or water in one side while in the other a liquid-liquid interface is present.

The "chemical interaction" between the acetate species and the ZIF particle surface is referred in the present invention to a coordinated chemical bond. Said interaction might happen through the nitrogen from the imidazole heterocycles and/or coordinated metal placed on the surface of the particles.

The term "aqueous medium" in the present invention is referred to any liquid phase mainly composed by water that can contain molecules or ionic metals solved.

A zeolitic imidazolate framework (ZIF) is a subclass of metal-organic frameworks (MOFs) which are topologically isomorphic with zeolites and are composed of tetrahedrally-coordinated transition metal cations connected by imidazolate linkers. In the present invention the transition metal cations could be selected from cobalt, iron, zirconium, titanium, copper, silver, lanthanides and their combinations. Preferably, the transition metal cations of the ZIF are Zn and/or Co.

The diameter range between 500 nm and 1300 nm for the nanoparticles improves both the external surface area and the floatability of the nanoparticles, resulting in a colloidal floating membrane with enhanced pollutant removal from the water and enhanced floatability.

On the other hand, the imidazolate linkers are imidazole heterocycles which can be selected from 2-methyl-imidazol, benzimidazole, 2-ethylimidazole, 5-chloro benzimidazole and purine. Preferably the imidazole heterocycle of the ZIF is 2-methyl-imidazol.

Non-limiting examples of nanoparticles comprising ZIFs with acetate species on their surface are ZIF-8 or ZIF-67 nanoparticles, for example produced by using 2-methyl-imidazol and zinc (Zn) or cobalt (Co) acetates as transition metal-organic precursors in their synthesis, respectively.

ZIF-8 presents a sodalite-type structure raised by the combination of Zn (II) ions and 2-methylimidazolate organic molecules. ZIF-8 provides the advantages of exhibiting high thermal and chemical stability, low water affinity, high affinity for organophilic compounds even in the presence of water, as well as a high surface area (typically around 1200m²/g) which improves its pollutant removal capabilities in liquid media such as water; properties which the resulting colloidal floating membrane will also present.

On the other hand, ZIF-67 presents a sodalite-type structure raised by the combination of Co (II) ions and 2-methylimidazolate organic molecules. ZIF-67 provides the advantages of high affinity for organophilic compounds even in the presence of water, as well as a high surface area (typically around 1200 m²/g) which improves its adsorption capabilities in liquid media such as water and photocatalysis; properties which the resulting colloidal floating membrane will also present.

Moreover, both nanoparticles of ZIF-8 and ZIF-67 with acetate species on their surface, present enhanced floatability which allow the resulting colloidal floating membrane to float atop the aqueous medium to be decontaminated, with its corresponding advantages. Also note that, for the synthesis of both ZIF-8 and ZIF-67, the same organic building unit (the imidazolate linkers, for example the 2-methyl-imidazole) can be used. Preferably, the transition metal node between ZIF-8 or ZIF-67 and the acetate species are Zn and Co respectively, or their combination.

The diameters of the nanoparticles of the invention refer to the mean diameter of the nanoparticle on the X and Y axis as measured by FE-SEM, averaging the diameter of all the nanoparticles observed in the FE-SEM images. However, other techniques like dynamic light scattering could also be used to determine such nanoparticle diameters.

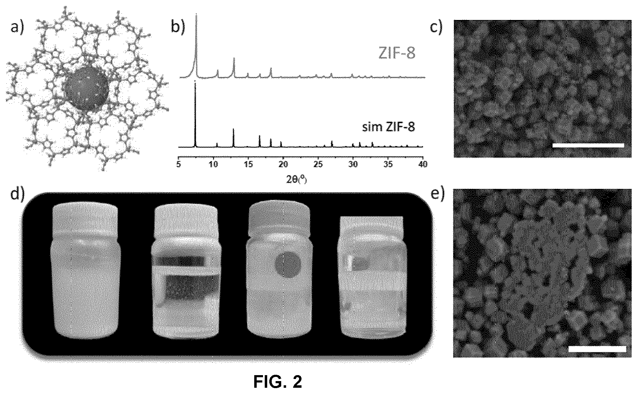

It was found that when the diameter of the nanoparticles according to the first aspect of the invention, was lower than 500 nm, such nanoparticles did not present proper floatability and a colloidal floating membrane could not be formed. For example, it was experimentally confirmed that nanoparticles of 100 nm provided a stable suspension of ZIF-8 in water (see figure 2) that remained stable over more than 6 months, instead of a colloidal floating membrane. In other words, particles of 100 nm cannot be used to form colloidal floating membranes for decontamination or catalysis applications on water bodies.

In a preferred embodiment, the nanoparticles have a have a cubic (CB), dodecahedric-rhombic (RD), or truncated dodecahedric-rhombic (TRD) morphology.

Moreover, it was found that when such nanoparticles presented a cubic (CB), dodecahedric-rhombic (RD), or truncated dodecahedric-rhombic (TRD) morphology, the floatability of the resulting colloidal floating membrane was enhanced.

In another preferred embodiment the membranes of the present invention may be self- supported on top of the water (due to their high floatability) or simply be placed in a physical support just at the very top of the water surface (hence in this case there is no need to submerge the physical support into the water body, therefore not disturbing the water).

In a preferred embodiment of the first aspect of the invention, the transition metal of the transition metal acetate is selected from zinc, cobalt, iron, zirconium, titanium, copper, silver, lanthanides metals, and any combinations thereof.

In yet another more preferred embodiment, the transition metal of the transition metal acetate is selected from zinc or cobalt. The use of zinc (Zn) presents the advantage that it is abundant and provides to the ZIF nanoparticles lower toxicity and higher thermal stability as compared to other MOFs (metal organic frameworks) or ZIF nanoparticles which include other metals.

Another aspect of the invention refers to a method to prepare the colloidal floating membrane of the present invention, which comprises the steps:
a) dissolving at least one imidazole-containing compound and at least one transition metal acetate in aqueous solution, and/or in an organic solvent selected from methanol, ethanol, propanol, isopropanol, acetone, N,N-dimethylformamide (DMF), tetrahydrofuran (THF), dimethyl sulfoxide (DMSO) and any combination thereof;
b) collecting the nanoparticles formed in step a) after a certain time ranging, from 3 seconds to 97 hours the aqueous solution and/or the organic solvent;
c) washing the nanoparticles obtained after step b) with water, and optionally exchanging the organic solvent; and
d) dispersing the nanoparticles obtained in step c) on an aqueous medium, preferably water.

The result of carrying out the method according to steps a) to d) is the formation of a colloidal floating membrane of nanoparticles on top of the aqueous solution.

In step a), the imidazole-containing compound (and a metal transition acetate are dissolved or mixed in an aqueous solution and/or in an organic solvent, resulting in the formation of the nanoparticles of ZIF with at least acetate species on the nanoparticle surface, wherein the acetate species is located at least on the surface of the nanoparticles.

The dissolution of step a) is preferably carried out under agitation for a period of at least 5 seconds and at an agitation speed between 100 rpm and 1000 rpm, preferably between 300 rpm and 500 rpm, more preferably between 370 rpm and 430 rpm.

The solvent for step a) is preferably water. Preferably, the imidazole-containing compound is dissolved first into the solvent and the transition metal acetate is added afterwards. Alternatively, the imidazole-containing compound may be dissolved into one solvent, then the transition metal acetate be dissolved into another solvent, and finally both solvents be mixed together. Preferably both solvents are the same solvent or soluble between each other.

The term "imidazole-containing compound" refers to a compound comprising an organic- building unit containing imidazole heterocycles, for example 2-methyl-imidazole or a ZIF, preferably ZIF-8 or ZIF-67, or their combinations.

In a preferred embodiment, the at least one imidazole-containing compound added in step a) is selected from 2-methyl-imidazole, benzimidazole, 2-ethylimidazole, 5-chloro benzimidazole, and purine, preferably the at least one imidazole-containing compound is 2-methyl-imidazole.. The use of 2-methyl-imidazole as the imidazole-containing compound provides the advantage that it is water-soluble.

In a preferred embodiment, the transition metal of the transition metal acetate used in step (a) is preferably selected from zinc, cobalt, iron, zirconium, titanium, copper, silver, lanthanides, and any combinations thereof, even more preferably from zinc or cobalt.

In a preferred embodiment, the molar ratio in step (a) between the imidazole-containing compound and the transition metal acetate are between 5:1 and 15:1, more preferably between 9:1 and 11:1, even more preferably 10:1.

In step b), the resulting nanoparticles from step a) are collected from the solution, preferably by filtration or centrifugation. Collecting the nanoparticles by filtration presents the advantage that it is faster than other techniques and can discriminate particle size. Collecting the nanoparticles by centrifugation presents the advantage that it shows an increasing in the yield.

The nanoparticles collected in step b) comprise a zeolitic imidazolate framework (ZIF), preferably ZIF-8 and/or ZIF-67.

In step c), the nanoparticles collected in step c) are washed with water, preferably by re-dispersing them in water and collecting them once again preferably by filtration or centrifugation. Washing the nanoparticles with water ensures that non-reacted chemical precursors such as imidazole-containing compounds, acetate species, and other organic solvents if used, are neither present on the surface nor in the interior of their pores. of the obtained nanoparticles at this stage, which may hamper their ability to form the colloidal floating membrane properties of step d), and its resulting properties.

In step d), the nanoparticles are added or dispersed into an aqueous medium or water. Once dispersed and left preferably without any kind of turbulence or agitation these nanoparticles self-assemble into a colloidal floating membrane that stands all by itself at the top of the aqueous medium or water, with an upper interphase with air and a lower interphase with aqueous medium or water. Note that part of this water is also intercalated within the resulting colloidal floating membrane obtained after step d).

In fact, when the obtained nanoparticles according to the first aspect of the invention are immersed or dispersed or mixed with water or an aqueous medium, the particles co-aggregated into colloids, forming a colloidal floating membrane at the top of the water surface, that is at the interphase between the air above and the liquid medium below.

Hence the presence of the acetate species provides technical advantages to the resulting colloidal floating membrane, not only promoting the aggregation of the nanoparticles into a colloidal floating membrane, but also increasing the contact angle between the membrane and the water medium below, hence inducing higher efficiency of the membrane for contaminant removal from the water, as well as higher floatability of the membrane on water, respectively.

Moreover, a diameter of such nanoparticles ranging from 500 nm to 2000 nm promotes the co-aggregation and floatability of such nanoparticles, resulting in a highly floatable and co-aggregated colloidal floating membrane.

All in all, the technical features of the colloidal floating membrane of the first aspect of the invention result in a membrane that provides high adsorption of water contaminants such as dissolved gases, salts, and organic molecules (such as inks, dyes, colorants, drugs, etc.) and is highly floatable, hence staying at the top of the aqueous medium. All this facilitates the introduction of the membrane into the aqueous medium (just dispersing the nanoparticles in the water medium is enough to let them settle and form the colloidal floating membrane at the top surface of the water body), as well as the extraction of the membrane from the aqueous medium without disturbing such medium (since the colloidal floating membrane stays at the top of the water body), while efficiently removing the aforementioned contaminants.

Another aspect of the invention refers to the use of the colloidal floating membrane of the present invention described above as decontaminating agent in a contaminated aqueous medium, with dissolved or dispersed contaminants. To perform said use of the membrane as a decontaminant is carried out by directly contacting the colloidal floating membrane described above with said contaminated aqueous medium. In fact, such floating membrane acts as an adsorbent or separator of contaminants from the aqueous media, preferably dissolved gases, salts, or organic molecules.

Preferably the dissolved gases are selected from CO₂, NO₂, O₂, NO₂ and any combination thereof.

Preferably the salts are selected from metal halides, metal sulfurs and sulfates and any combination thereof.

Preferably the organic molecules are selected from dyes, colorants, drugs, pesticides, agrochemical compounds, hormones, animal secretions, and any combination thereof.

The floating films of the invention allow the easy removal of contaminants from water, since the molecules can transfer from the bulk of the solution to the upper air contact region of the floating membrane.

Moreover, such membranes may also be used as catalysts of chemical reactions, such as for example the decomposition of the colorant "dimethyl blue" into other organic molecules, as a non-limiting example. What is more, such floating membrane stays stable on the top surface of the water medium for periods of up to 6 months, allowing its long-term use for such applications.

Therefore, another aspect of the present invention refers to the use of the colloidal floating membrane of the present invention as catalysts.

Another aspect of the invention, refers to a decontaminating device characterized in that it comprises:
- a container comprising:
   i. the colloidal floating membrane described above,
   ii. an air interphase on top of the colloidal floating membrane, and
   iii. means for letting contaminated water into the container.
   wherein the container is impermeable to the leakage of the colloidal floating membrane outside of the container, and wherein the container is configured to be isolable from the contaminated water.

Non-limiting examples of such containers are plastic, metal and glass based.

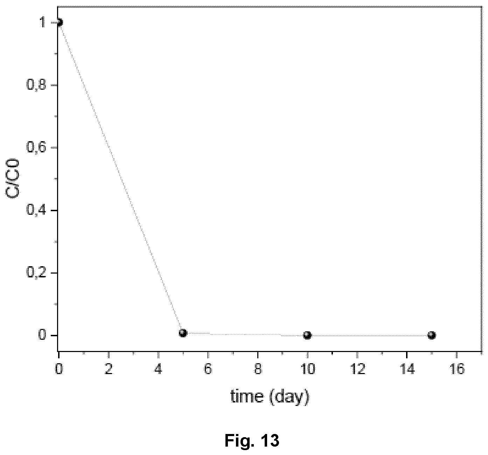

The colloidal floating membrane (1, see Fig. 13) of the decontaminating device, which is contained within the container that does not allow it to leak it out, can be any of the colloidal membranes according to any of the aforementioned aspects of the invention.

The air interphase (2, see Fig. 13) of the container and the colloidal membrane, may be air contained within the container itself (in which case the container is closed at the top with an impermeable material to air, so that the air cannot get out), or may be the environmental atmosphere itself (in which case the container is open at the top).

The aqueous medium (3, see Fig. 13) at the bottom of the container and the colloidal membrane, may be water already contained in the container itself (in which case the contaminants of the contaminated water to be contaminated will flow by diffusion from the contaminated and through the already-contained water to the colloidal membrane which will adsorb them), or the aqueous medium may be the contaminated water itself that has been let inside the container.

The means for letting decontaminated water in and out of the container, may be any which allow the passage of water known in the state of the art. Non-limiting examples of such means are membranes, lids, blades or gates (4, see Fig. 13).

This device may be left to float on the water to be decontaminated, or may be attached to the surface of the water to be decontaminated, for example on the surface of a pipeline through which the contaminated flows via attachment means to the pipeline (5, see Fig. 13).

The contaminated water body on or into which the device is placed, may be any including water from pipelines, lakes, swimming pools, streams, rivers, wet lands, slurries.

Throughout the description and the claims, the word "comprises" and its variants do not intend to exclude other technical features, additives, components or steps. For those skilled in the art, other objects, advantages and features of the invention may be partially deduced from both the description and the implementation of the invention. The following examples and figures are provided by way of illustration and are not intended to limit the present invention.

### BRIEF DESCRIPTION OF THE FIGURES

**Fig. 1****.** Decolorated media analyzed by HPLC-MS.

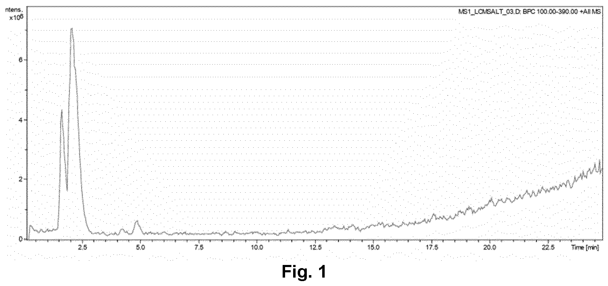

**Fig. 2.** a) sketch of the 3D-morphology of a ZIF-8 nanoparticle; b) XRD powder pattern from ZIF-8-RD (ZIF-8, grey line) as compared to the theoretical XRD powder pattern simulated from CSD crystalline data (sim ZIF-8, black line); c) FE-SEM image of the ZIF-8-RD dodecahedra (RD) nanoparticles, scale bar 3 microns; d) redispersion of the ZIF-8RD nanoparticles in water in a ratio of 5mg/mL, and its evolution in time as shown by several vials, from the moment the ZIF-8-RD nanoparticles are fully and homogeneously dispersed in water (left vial), until a floating membrane is formed after 6 days (right vial); e) FE-SEM image of the floating membrane recovered from the right vial of Figure 1d, which has been previously dried, scale bar 5 microns
**Fig. 3****.** Size distribution of the ZIF-8-RD particles observed by FE-SEM (Figure 1c), with main size of 1200 nm.
**Fig. 4****.** Red laser (Figure 3a) pointing at different vials of water with dispersed ZIF-8-RD nanoparticles, wherein the laser points either at the bulk of the water (Figure 3a) or at the air-water interphase where the colloidal membrane is formed (Figure 3b).
**Fig. 5****.** Morphology (schematic), FE-SEM image at X magnification, size distribution, actual vial with a water medium atop which the "colloidal floating membrane" is formed, and XRD patterns of such "colloidal floating membrane", for each of the 3 types of ZIF-8 nanoparticles (TRB, CB, RD).
**Fig. 6****.** Scheme of the floatability of the 3 types of ZIF-8 nanoparticles (TRB, CB, RD) depending on the average nanoparticle diameter, concluding that sizes of at least 500nm are necessary for the nanoparticles to float and be able to form a "colloidal floating membrane".
**Fig. 7.** a) vial of water in which nanoparticles of ZIF-8 have been dispersed, and left to rest for 2 months, showing part of the nanoparticles at the top forming a "colloidal floating membrane", while other nanoparticles precipitate at the bottom; b) XRD diffraction pattern from the nanoparticles submerged at the bottom of a) ; c),d),e) 3 different FE-SEM images of the precipitated nanoparticles at the bottom of the vial taken at different magnifications: c) 12500x ; d) 14000x e) 25000x.
**Fig. 8****.** FT-IR spectra from the nanoparticles present in the vial of Figure 6a, namely from the nanoparticles present at the top forming the "colloidal floating membrane" (black FTIR line at the top of figure 7) and from the nanoparticles at the bottom of the vial (grey FTIR line at the bottom of figure 7).
**Fig. 9****.** XRD diffraction pattern from analogous ZIF-8 nanoparticles as those of the invention, but using as a transition metal precursor instead of a transition metal acetate, ZnCl₂ (top diffraction pattern) or Zn(NO₃)₂ (bottom diffraction pattern).
**Fig. 10****.** FT-IR spectra from analogous ZIF-8 nanoparticles as those of the invention, but using as a transition metal precursor instead of a transition metal acetate, ZnCl₂ (top FT-IR spectrum) or Zn(NO₃)₂ (bottom FT-IR spectrum).
**Fig. 11.** a) three vials comprising a water solution into which 3 different nanoparticles have been dispersed, namely the nanoparticles of the invention ZIF-8-RD with acetates (left vial), the nanoparticles sintered with the precursor Zn(NO₃)₂, (middle vial) and the nanoparticles sintered with the precursor ZnCl₂ (right vial); b) surface charge by Z-potential for each of the 3 nanoparticles dispersed in Figure 10a.
**Fig. 12**. a) organic red dye 7,7-diazaisoindoigo added to a water body comprising ZIF-8-RD, with the formation of a floating membrane which absorbs the dye; b) methylene blue dye (MB) added to a water body comprising ZIF-8-RD which has been agitated (left vial), where a floating film is evolved after 5 days of rest (middle vial), and further evolution after 10 days (right vial).
**Fig. 13****.** Decomposition of the dye and the analysis of the aqueous phase by HPLC-MS
**Fig. 14****.** ZIF-67 nanoparticles sintered from 2-methyl-imidazole and cobalt acetate, a) dispersion of the ZIF-67 nanoparticles in water let to rest for 24h; b) scheme of their morphology; c) their XRD diffraction pattern; d) a FE-SEM image of the ZIF-67 nanoparticles at scale bar 5 microns.
**Fig. 15****.** Scheme decontamination Device comprising a colloidal floating membrane and a container, according to the invention, wherein the decontamination device comprises a colloidal membrane (1) with an upper interphase with air (2) and a lower interphase with an aqueous medium (3), means for letting contaminated water in which can be opened of closed, such as a blade or a gate (4), and means for attachment to a pipeline containing the contaminated water (5).

### EXAMPLES

### Materials

All chemical reagents and solvents were purchased from Sigma Aldrich and used as received without further purification. Ultrapure water (resistivity of 18.2 MΩ cm) was obtained with a Purelab Chorus 1 from Elga.

### Example 1. Synthesis of ZIF-8 TRD particles

For the synthesis of truncated dodecahedron of ZIF-8 (ZIF-8-TRD), 0.3 g (1.37 mmol) of Zn (CH₃COO)₂·2H₂O (99.9%) were dissolved in 5 mL of water and mixed with 2-methylimidazole (1.1 g) previously dissolved in 6.5 mL of water. The resulting mixture was then gently stirred at room temperature for a variable time, ranging from 5 seconds to 10 minutes (5 seconds (ZIF-8-100), 2 minutes (ZIF-8-270) 5 minutes (ZIF-8-470), 10 minutes (ZIF-8-TRD)). Actually, the initial mixture became turbid after some seconds but the reaction is let to progress for a variable time.

### Example 2. Synthesis of ZIF-8 CB particles

For the synthesis of cubic ZIF-8 (ZIF-8-CB), 0.3 g of Zn (CH₃COO)₂·2H2O (99.9%) were dissolved in 5 mL of water and then 2-methylimidazole (1.1 g) dissolved in 6.5 mL of water were added. In the present case, the resulting mixture was soft stirred for 30 minutes at room temperature.

### Example 3. Synthesis of ZIF-8 RD particles

For the synthesis of rhombic dodecahedra ZIF-8 (ZIF-8-RD), 0.3 g of Zn (CH₃COO)₂·2H₂O (99.9%) were dissolved in 5 mL of water, and mixed with 1.1 g of 2-methylimidazole dissolved in 6.5 mL, while keeping the mixture under gentle stirring for 96 hours at room temperature.

**Example 4. Synthesis of ZIF-8-CI and ZIF-8-NO3 particles** (not part of the invention, just to prove that with similar nanoparticles without the presence of acetates on their surface, the colloidal floating membrane cannot be formed)

ZIF-8-CI and ZIF-8-NO3 are prepared following the same procedure described for ZIF-8-TRD (10 min) but exchanging Zn (CH₃COO)₂·2H₂O reagent with 1.37 mmol of ZnCl₂ or Zn(NO₃)₂, respectively.

### Example 5. Purification and extraction of the ZIF-8 materials

Once the set time for the stirring has been achieved, all the ZIF-8 nanoparticles obtained in examples 1 to 4 were separated from the solvent by centrifugation at 12000 rpm during 15 min, using 50 mL Falcon tubes. The recovered precipitates were then re-dispersed in 15 mL of water twice, recovering the particles each time by centrifugation at 12.000 rpm.

### Exaple 6. Preparation of ZIF-8 floating interphase

ZIF-8 floating interphase have been formed by dispersing the separated particles obtained in example 5 ranging from 1mg/mL to 8 mg/mL of ZIF-8 in 15 mL of water. The dispersion is dropped in a glass vial and the system left to evolve overtime, until the floating film is formed.

### Example 7. Characterization techniques

X-ray powder diffraction (PXRD) of the prepared ZIF solids were recorded on a powder X-ray diffraction (Bruker D8 Advance diffractometer (DAVINCI), working with λCu = 1.5406 Å), from 5 to 40° (2θ). Field-emission scanning electron microscopy (FE-SEM) images were collected in a FEI-NOVA NanoSEM 230 microscope with an acceleration voltage of 2 kV. The size of the nanoparticles was calculated from FE-SEM images by averaging the size of the crystals observed in images of different areas of the sample. TEM images were collected in a TEM/STEM JEOL 2100F equipment, operating at 200 kV with a Field Emission Gun at a point resolution of 0.19 nm. Volumetric N2 sorption measurements were collected at 77 K using ASAP 2010 and TriStar sorption system (Micromeritics). Before the adsorption measurements, the samples were outgassed at 120 °C overnight. IR spectra of the floating membranes were obtained using attenuated total reflectance IR microscope coupled to a Vertex 70v Spectrophotometer (Bruker). Contact angles measurements were carried out using a 7 µL drop of water deposited on top of a pellet of ZIF-8 samples, previously obtained by pressing the ZIF-8 powder at 4 tons for 4 seconds. The Methylene blue concentration (an example of a contaminant to be absorbed in the water by the floating membrane) is determined using image colorimetry (by RGB contribution) correlated with a stock solution. The molecules derived from the total decolorated media were analyzed by HPLC-MS (Fig. 1) and the results are shown in the next table:

**Table 1 show the molecular mass of the fragments formed after methylene blue decomposition by the action of the system, meanwhile Fig. 1 shows the quantitative relation of the formed species in function of time. As soon in Figure 1 a very low amount of initial methylene blue (42 min, 328) is present after the exposition to the system.**

| **Retention time (min)** | **m/z** |
|---|---|
| 1.6 | 198 |
| 1.8 | 256 |
| 2.0 | 163 |
| 2.0 | 293 |
| 2.5 | 114 |
| 4.2 | 328 |

The crystalline structure of ZIF-8 is formed by coordination bonds between Zn metal nodes and N atoms from the imidazole heterocycle molecules raising a periodic 3D structure that presents a permanent porosity due to its structural cavities of typically 1.1 nm diameter (see Figure 2a). ZIF-8 particles were grown in close to sustainable conditions, using water as synthesis media, room temperature and no other organic compound beside the mandatory organic building unit of the structure (2-metylimidazol). ZIF-8 was selected among the large chemical composition diversity of MOF since it is based on Zn atoms, which is an abundant element in the earth with low toxicity and because it also presents higher thermal stability than other MOF structures, which is on interest in several industrial process.

The success of the synthetic approach followed to prepare ZIF-8 crystalline particles (ZIF-8-RD) is corroborated by the comparison of the XRD powder pattern (Figure 1b) of the dry solid (ZIF-8, grey line) and the theoretical pattern simulated from crystalline data CSD (sim ZIF-8, black line). XRD diffractograms show the presence of the expected crystalline phase in all the prepared solids, where the typical planes related to (110), (200), (211) are clearly identified at 7.3, 10.3 and 12.7 in 2 theta angles, respectively, and the determined permanent porosity is in good agreement with previously reported data of 1400 m²/g [Huang, X.-C., Lin, Y.-Y., Zhang, J.-P. and Chen, X.-M. (2006), Ligand-Directed Strategy for Zeolite-Type Metal-Organic Frameworks: Zinc(II) Imidazolates with Unusual Zeolitic Topologies. Angewandte Chemie International Edition, 45: 1557-1559.]

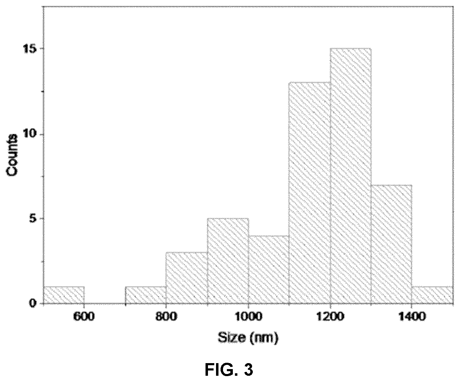

The observation of formed ZIF-8 particles by FE-SEM, confirms a formation of rhombic dodecahedra (RD) crystals (see Figure 1c) with main diameter size of 1200 nm (Figure 3). The diameter sizes plotted in Figure 3 refer to the mean diameter of the nanoparticle on the X and Y axis as measured by FE-SEM, averaging the diameter of all the nanoparticles observed in the FE-SEM image of Figure 1c.

Interestingly, a redispersion of this ZIF-8-RD crystals in water in a ratio of 5 mg/ml gives a dispersion of ZIF-8 particles that evolves during time under static conditions to a floating interphase after 6 days (see Figure 2d). The observed phenomena is produced as follows:
1) an initial stage where the particles remain dispersed in the water media as a suspension, typically it lasts for a few hours;
2) in a second stage the particles fall to the bottom of the vial while some large aggregates remain suspended inside the bulk of the liquid phase;
3) Stage in which initially is observed a floating region in the limiting interphase between liquid and air that evolve as aggregates and particles move from the bottom to the floating region; and finally:
4) formation of a floating interphase by MOF particles on water that remains stable for a variable time, typically during two to six months.

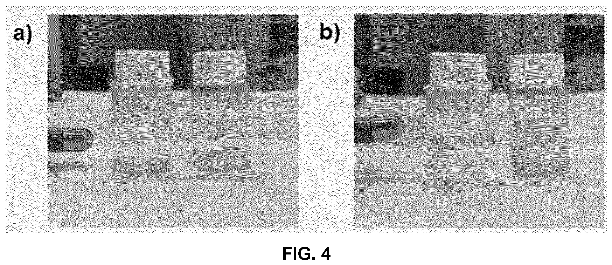

To establish the end of the formation phenomena, a red laser (Figure 4a) was pointed to the bulk of water (to the left vial of Figure 4a) with dispersed ZIF-8-RD nanoparticles, obtaining coherence which indicates low to no quantity of particles dispersed in the bulk liquid phase (in the colored image it can be (observe that the left vial in Fig. 4a does not show a difference in coloration due to the laser crossing its fluid). For comparison, the laser was let to cross-throw a second vial (vial to the right of figure 4a) that contains a fresh dispersion of ZIF-8-TRD colloidal nanoparticles, showing the expected dispersion in the wave (observed as a whiter region on the right vial of figure 4a, although in the original colored-image it is a light pink region).

When the laser is focused on to the floating film region (Figure 4b, left vial) a clear coloration (pinky color, although it looks like a whiter region due to the conversion to a black and white image) is obtained at the air-water interphase due to the presence of the particles of the colloidal floating membrane.

The disposition of the particles at the film is observed by recovering it from the liquid and placing on a glass slide to be observed by Field Emission Scanning Electron Microscopy. The image in FE-SEM (Figure 2e) shows the presence of large-oriented aggregates of ZIF-8-RD particles, typically in a face-to-face fashion. Those large aggregates are not present in the solid of the ZIF-8-RD when is dried after washing at 80 °C (Figure 2c), that is it is not present before the ZIF-8-RD aggregate is dispersed in water to form the colloidal floating membrane.

Once this particular phenomenon was observed, the next step was to determine the role of crystal morphology in the phenomena, as each morphology is expected to expose at their surfaces and edges several differences in terms of chemical composition. For example, cubes are expected to be more enriched in Zn metal nodes than RD at the crystal surface which would be intuitively counter-balanced by counterions present in the synthesis media. Figure 4 shows that the floating interphase is achieved when using all ZIF-8 prepared in the work, i.e. particles with rhombic dodecahedra (RD), cubic particles (CB) and truncated rhombic dodecahedras (TRD) morphologies.

For the same amount of nanoparticles (1mg/mL), ZIF-8-CB forms the floating membrane in the shortest time (2 seconds to 10 minutes), ZIF-8-TRD forms the floating membrane on top of the water at a longer time (10-30minutes), while ZIF-8-RD particles require much longer time to produce the floating phase (which is 24-96 hours). Thus, even if the surface chemistry of each morphology can be slightly different, those variations are not enough to disable the phenomena which result in the formation of the colloidal floating membrane.

The permanent porosity of the different morphologies and crystal sizes was determined by exposing the dried solid to nitrogen adsorption, integrating the data on the BET equation, obtaining the typical values expected for the typical ZIF-8 structure of 1200-1500 m²/g.

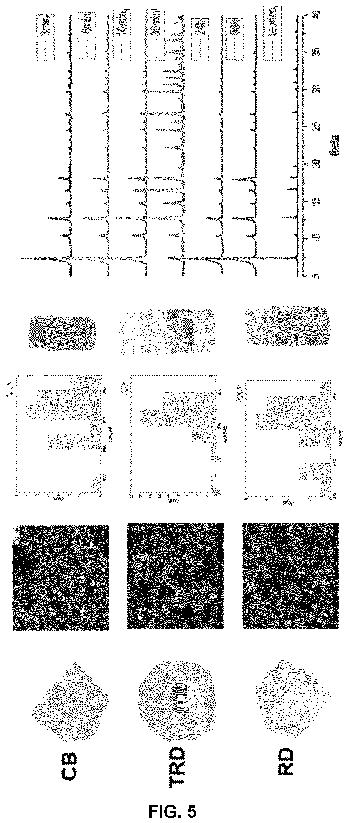

Figure 5 is a diagram showing for the three types of ZIF-8 nanoparticles of the invention, their floatability when redispersed in water as a function of the average diameter size of the nanoparticles. Note that the ZIF-8-TRD nanoparticles, namely ZIF-8-100, ZIF-8-250 and ZIF-8-470 synthesized after 2 minutes, 5 minutes, and 10 minutes respectively, present an average particle diameter (or crystal size) lower than 500 nm, and hence when such nanoparticles are redispersed in an aqueous medium, they do not float and do not create a colloidal floating membrane. In contrast, the particles of TRD with higher average particle diameter than 500 nm (see ZIF-8-TRD in Figure 5), as well as the cubic (ZIF-8-CB) and rhombic dodecahedra (ZIF-8-RD) particles with average particle diameter higher than 500 nm and up to 1300 nm. Hence, the diagram of Figure 5 shows that the nanoparticles of the invention with average particle diameter comprised between 500-1300nm can form a colloidal floating membrane.

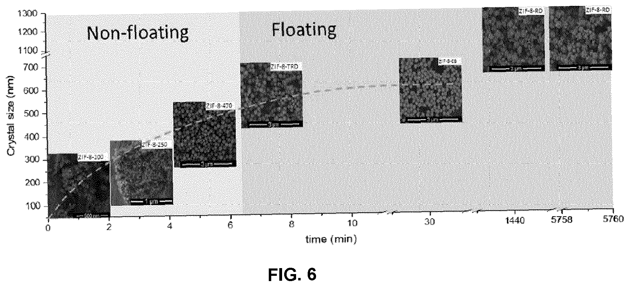

It must be noted that varying the synthetic conditions, mainly time and /or concentration of the starting reagents, several nanoparticle sizes for the different types of ZIF-8 can be synthesized. With this knowledge, ZIF-8 of different nanoparticle sizes were sintered. It was surprisingly found that the particle size must be above 500 nm of diameter (see Fig. 6). Smaller particles, like those of 100 nm, provide a stable suspension of ZIF-8 in water (figure 3) that remains stable over more than 6 months, without the formation of a colloidal floating membrane.

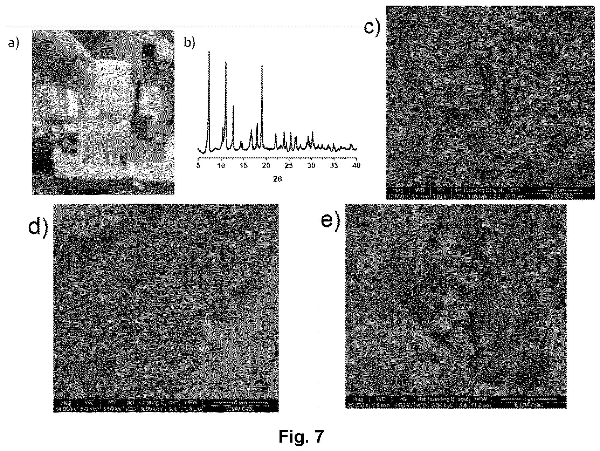

Another characteristic of the studied system is that after a certain time (typically more than 2 months) some evolved and there is a presence of solid at the bottom of the vials, increasing its quantity with time (Figure 7a). The XRD diffraction pattern of the extracted and dried bottom solid (Figure 7b) shows the presence of beta-Zn (OH)₂, while no acetates are present in the solid the bottom., indicating a decomposition of the nanoparticles overtime, and also indicating that the presence of acetates is crucial in the flotability (given that the solid at the bottom does not present acetates). The images of those precipitated solids obtained by FE-SEM (Figures 7c-7e) also confirm a partial decomposition of some of the MOF particles has taking place, pointing out that the integrity of the MOF phase is a necessary condition in the formation of the film and its floatability.

The images of those precipitated solids obtained by FE-SEM (Figures 7c, 7d, 7e) show that some MOF nanoparticles and indetermined solid that don't remain crystalline particles. These images confirm that a partial decomposition of some of the ZIF-8-TRD particles has taken place, pointing out that the integrity of the nanoparticles is a necessary condition in the formation of the film, its floatability, and its stability overtime.

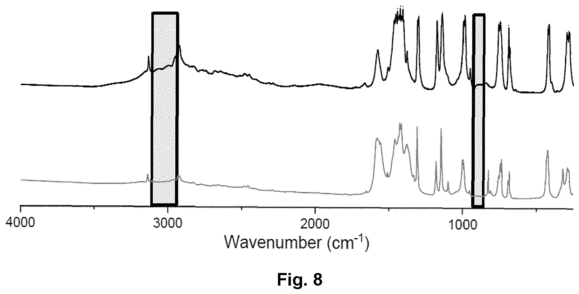

Another relevant observation is depicted by comparing the IR spectra (see Figure 8) of the film phase and the fallen solid of the nanoparticles ZIF-8-TRD of the vial of figure 7a. The FT-IR spectra of the nanoparticles present at the bottom do not show relevant differences from typical ZIF-8 materials reported elsewhere (DOI:10.1038/s41598-018-28015-7), but the ZIF-8-TRD nanoparticles recovered directly from the floating film show some other FT-IR bands. Especially relevant are the observation of a new centered band at (900 cm⁻¹) and the change on bands in the region between 2900-3100 cm⁻¹. Those bands are typically associated with the resonance of carboxylate groups and with the sketching of N-H vibrational bands respectively. The presence of the band related to carboxylate groups in the floating interphase suggest a key role of the counterion of the acetate metal source (Zn acetate) that would remain, at least, at the external surface of the ZIF nanoparticles, promoting higher hydrophobicity on the material and favoring its floatability. It cannot be dismissed that the presence of those carboxylic groups and the organic chains contributed to stabilize the interparticle interactions. The interphase afforded by these counterions is necessary to promote interactions with imidazole groups in the ZIF structure allowing the assembly of the particles and the floating film formation.

### Example 8. Comparative between the ZIF-8 nanoparticles of the invention (comprising transition metal acetates on the surface) to analogue ZIF-8 nanoparticles, but using as transition metal precursors Zn(NO₃)₂ and ZnCl₂, instead of transition metal acetates.

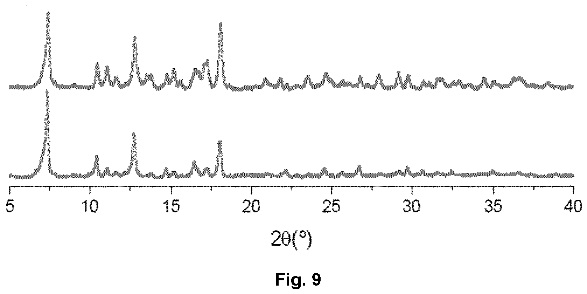

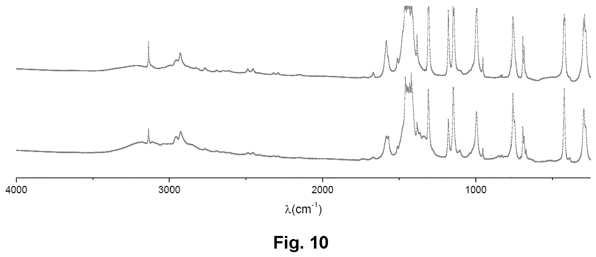

The formation of analogue ZIF-8 nanoparticles with Zn(NO₃)₂ and ZnCl₂ was confirmed by their XRD diffraction pattern (see Figure 9) and their FT-IR spectra (see figure 10). This in turn verified a comparable porosity and particle size for these particles similar to the ZIF-8 nanoparticles with acetates of the invention. However, none of these particles without acetates presented any kind of floatability, which supports the key role of the counterion (acetate) in order to be able to produce "colloidal floating membranes".

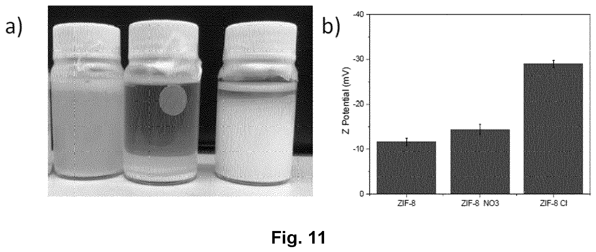

In fact, in Figure 11a three vials comprising a water solution into which 3 different nanoparticles have been dispersed, namely the nanoparticles of the invention ZIF-8 with acetates (left vial), the nanoparticles sintered with the precursor Zn(NO₃)₂, (middle vial) and the nanoparticles sintered with the precursor ZnCl₂ (right vial).

The suspension prepared with ZIF-8-NO3 (middle vial of Figure 11a) presents a white precipitate at the bottom after few hours of preparation, while ZIF-8-CI (right vial of Figure 11a) starts to form a colloidal suspension that slowly collapses to a precipitate that never forms the floating phase. In contrast, in the suspension of ZIF-8 prepared using Zn acetate as precursor (middle vial of Figure 11a), the nanoparticles start raising up such that they form the floating film right after the suspension is prepared. This experiment demonstrates that the presence the acetates as counterion is crucial to achieve the formation of the floating film.

Moreover, to confirm the different nature of the nanoparticles, dry particles of each of the three ZIF-8 nanoparticles were pelletized to measure their wettability. The contact angle measurements show a higher hydrophobicity of the ZIF-8-RD with acetates (102 °) compared to that of ZIF-8-NO3 (59°) and ZIF-8-CI (44°). This trend is also corroborated by measuring the surface charge of each kind of ZIF-8 nanoparticles by the Z-potential technique (Figure 11b). The ZIF-8-RD nanoparticles synthesized using Zn acetate present lower surface charge than those of the ZIF-8 prepared using Zinc nitrate, while also being almost 3 times lower than those of the ZIF-8 prepared with ZnCl₂ as metal source.

Moreover, dynamic water vapor sorption isotherms at 25 °C of ZIF-8, ZIF-8-CI and ZIF-8-NO3 also showed the expected trend. Note ZIF-8 is highly hydrophobic and does not fill all of its pores (https://doi.org/10.1038/nchem.2875). ZIF-8 synthesized using Zinc acetate shows a water uptake at 95 %RH, which is lower than that of ZIF-8-CI and ZIF-8-NO3, despite the ZIF-8 with acetates of the invention presenting a slightly higher surface area. These suggests the possibility that a factor contributing to the floatability (of an air-liquid interphase) of the ZIF-8 nanoparticles with acetates may be air trapped inside the ZIF-8 synthesized with acetates, maybe due to its higher hydrophobicity. Thus, internal channels of exchange of water and air in the internal channels ZIF-8 with acetates could promote a dynamic change in the system that in the end promotes the apparent contact angle raising up the particle aggregates.

### Example 9. Use of ZIF-8-RD nanoparticle (with acetates) colloidal floating films for the decontamination of water bodies.

As a first proof of concept an organic dye 7,7-diazaisoindiogo (doi: 10.1039/c5tc03464g) was added to a water body into which ZIF-8-RD had been previously dispersed. This dye presents a red coloration which allows to easily follow the performance of the decontamination/decomposition of this dye by the floating membrane of the invention. After shaking the mixture, the dye interacts with the ZIF-8-RD nanoparticles favoring even a faster formation of the floating interphase (Figure 11a, which is in black and white, so the darker red coloration seen darker at the top of the vial highlights the floating membrane where most of the red dye has been adsorbed, and the rest of the liquid would be seen as a lighter red coloration in a colored picture, because a bit of the dye still remains in the body of the liquid)). Then, once absorbed by the floating membrane, this hydrophobic dye contaminant is easily recovered from the water by simply removing the floating film from the water.

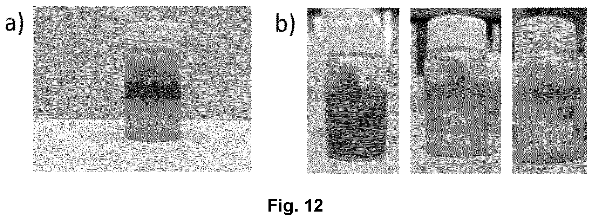

Another contaminant dye, namely methylene blue dye (MB) soluble in water, was also added to a water body where ZIF-8-RD had been previously added. In this case, firstly a homogeneous dispersion of ZIF-8-RD in the solution containing MB is produced by agitation (figure 12b, left vial), without a clear evolution. However, after 5 days (figure 12b, middle vial), the floating film is slowly evolved, and the solution is decreased in dye concentration. Interestingly, the formed floating film is not deep blue, but light violet (this can't be seen in Figure 12b because it is a black and white picture), suggesting a partial decomposition of the dye during the process rather than fully physisorption process. The system was left to evolve under visible light for 10 more days. After this period, the water solution becomes fully transparent (figure 12b, right vial) while further de-coloration to a lighter pink is observed at the film after 10 days (figure 12b, right vial). The decomposition of the dye and the analysis of the aqueous phase by HPLC-MS (Figure 13) indicates the presence of small organic species that may derive from the methylene blue molecule, confirming a potential catalysis role of ZIF-8 floating films.

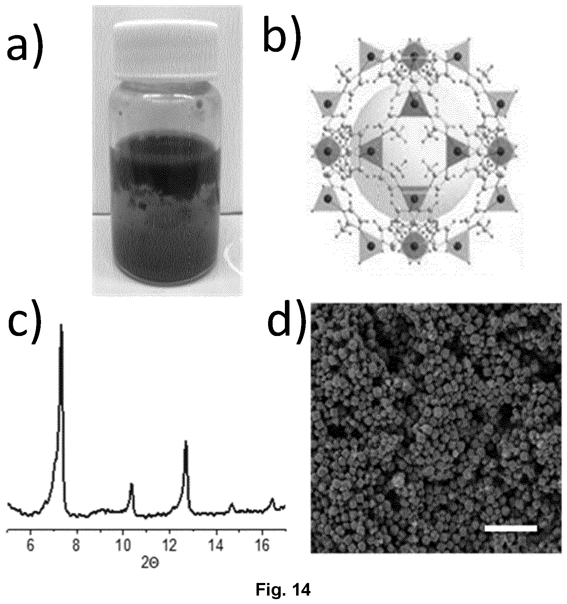

Finally, to demonstrate the potential generalization of the here reported ZIF-8 floating film approach, a second ZIF was prepared under similar conditions in water and at room temperature. Namely, ZIF-67 nanoparticles (see scheme of their morphology in Figure 14a), a cobalt based zeolitic imidazole framework sintered from 2-methyl-imidazole as the organic building unit (same as for ZIF-8, since both ZIF-8 and ZIF-67 share the same organic building unit), and cobalt acetate as the transition metal acetate (see Figure 14a). The XRD diffraction pattern of the ZIF-67 nanoparticles (see Figure 14b) confirmed the ZIF-67 formation as a pure phase. The average diameter size of the formed ZIF-67 nanoparticles was measured from FE-SEM images (one of the images shown in Fig. 14c), which was confirmed to be over the minimum range of floatability, in this case ca. 800±12 nm. The recovered particles, once dispersed again in pure water led to the formation of a floating film interphase in less than 24 hours (see figure 14d), confirming the possibility to extend the methodology to other ZIF structures.

### Example 10. Comparative example synthesis of nanoparticles adding a surfactant compound and uses as a decontamination membrane.

For the synthesis of ZIF-8 (ZIF-8-TRD), 0.3 g (1.37 mmol) of Zn (CH₃COO)₂·2H₂O (99.9%) and 20 mg of CTAB were dissolved in 5 mL of water and mixed with 2-methylimidazole (1.1 g) previously dissolved in 6.5 mL of water. The resulting mixture was then gently stirred at room temperature for a variable time, ranging from 5 seconds to 10 minutes (5 seconds (ZIF-8-100), 2 minutes (ZIF-8-270) 5 minutes (ZIF-8-470), 10 minutes ZIF-8-TRD. Since the surfactant is present in the mixture when the nanoparticles are dispersed, the mixture does not float. In addition, after 5 days there is no color change in the solid particles as it was seen in the film obtained in the examples of use of the membranes according to examples 1 to 5.

### Example 11. Decontamination device comprising the colloidal floating membrane of the invention for the decontamination of water bodies.

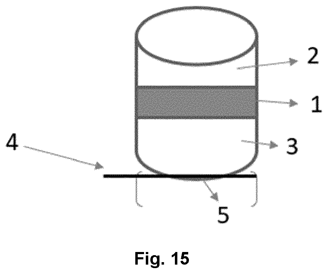

Regarding the decontamination device comprising a colloidal floating membrane and a container, an example of such a device is schematically depicted in Figure 15. Namely, the contamination device is placed vertically (that is with its height being longer than its width), comprises the colloidal membrane according to any aspect of the invention, the container is open at the top so that the air of the upper interphase is atmospheric air, the aqueous medium at the bottom was already pre-included into the container before being the container put on the surface of the contaminated water, the means for letting the contaminated water in and out are an opening blade or gate, and the container is attached to the surface of a pipeline through which contaminated water flows, being the bottom of the container in physical contact with the contaminated water from the pipeline.

## Claims

1. A colloidal floating membrane **characterized in that** it comprises
nanoparticles dispersed in an aqueous medium, preferably water,
and a zeolitic imidazolate framework (ZIF);
said nanoparticles comprising at least one acetate species on its surface
wherein the acetate species interact chemically with the surface of the ZIF;
wherein the nanoparticles have a diameter ranging from 500 nm to 2000 nm measured by FE-SEM, preferably the nanoparticles have a diameter ranging from 500 nm to 1300 nm; and
wherein the floating membrane has an upper interphase with air and a lower interphase with the aqueous medium, preferably water.

2. The membrane according to claim 1, wherein the imidazole heterocycle of the ZIF is selected from 2-methyl-imidazol, benzimidazole, 2-ethylimidazole, 5-chloro benzimidazole and purine, preferably the imidazole heterocycle of the ZIF is 2-methyl-imidazol.

3. The membrane according to any one of claims 1 or 2, wherein the nanoparticles of ZIF are selected from ZIF-8, ZIF-67, and any combinations thereof.

4. The membrane according to any one of claims 1 to 3, wherein the nanoparticleshave a cubic (CB), dodecahedric-rhombic (RD), or truncated dodecahedric-rhombic (TRD) morphology.

5. A method to prepare the colloidal floating membrane described in any one of claims 1 to 4, which comprises the steps:
a) dissolving at least one imidazole-containing compound and at least one transition metal acetate in aqueous solution and/or an organic solvent selected from methanol, ethanol, propanol, isopropanol, acetone, DMF, THF, DMSO, and any combination thereof;
b) collecting the nanoparticles formed in step a) from the aqueous solution and/or from the organic solvent;
c) washing the nanoparticles obtained after step b) with water, and optionally exchanging the organic solvent; and
d) dispersing the nanoparticles obtained in step c) on an aqueous medium, preferably water.

6. The method according to claim 5, wherein the at least one imidazole-containing compound is selected from 2-methyl-imidazole, benzimidazole, 2-ethylimidazole, 5-chloro benzimidazole and purine, preferably the at least one imidazole-containing compound is 2-methyl-imidazole.

7. The method according to claim 5 or 6, wherein the nanoparticles collected in step b) and dispersed in step d) comprise a zeolitic imidazolate framework (ZIF).

8. The method according to claim 7, wherein the ZIF comprised by the nanoparticles is ZIF-8 and/or ZIF-67.

9. The method according to any one of claims 5 to 8, wherein the transition metal of the transition metal acetate used in step (a) is selected from zinc, cobalt, iron, zirconium, titanium, copper, silver, lanthanides, and any combinations thereof.

10. The method according to claim 9, wherein the transition metal of the transition metal acetate used in step (a) is zinc and/or cobalt.

11. The method according to any one of claims 5 to 10, wherein the nanoparticles are collected in step b) by separating them from the aqueous solution by filtration or centrifugation.

12. The method according to any one of claims 5 to 11, wherein the nanoparticles collected in step c) are washed with water, preferably by re-dispersing them in water and collecting them once again, said collection of the nanoparticles is preferably performed by filtration or centrifugation.

13. Use of the colloidal floating membrane described in any one of claims 1 to 4 as decontaminating agent of a contaminated aqueous medium.

14. Use of the colloidal floating membrane according to claim 13 wherein the contaminant of the aqueous medium is selected from:
• gases, preferably selected from CO₂, NO₂, O₂ NO₂ and any combination thereof;
• salts, preferably selected from metal halides, metal sulfurs and sulfates and any combination thereof; and
• organic molecules, preferably selected from dyes, colorants, drugs, pesticides, agrochemical compounds, hormones, animal secretions and any combinations thereof.

15. A decontaminating device **characterized in that** it comprises:
• a container (5) comprising:
i. the colloidal floating membrane (1) according to any one of claims 1 to 4,
ii. an air interphase on top of the colloidal floating membrane (2), and
iii. means for letting contaminated water into the container (4).
wherein the container is impermeable to the leakage of the colloidal floating membrane outside of the container, and wherein the container is configured to be isolable from the contaminated water.
